(19) Europäisches Patentamt
European Patent Office
Office européen des brevets

(11) EP 3 145 627 B1

(12) **EUROPÄISCHE PATENTSCHRIFT**

(45) Veröffentlichungstag und Bekanntmachung des Hinweises auf die Patenterteilung:
**19.02.2020 Patentblatt 2020/08**

(21) Anmeldenummer: **15724287.6**

(22) Anmeldetag: **21.05.2015**

(51) Int Cl.:
***B01D 67/00*** *(2006.01)* ***B01D 69/02*** *(2006.01)*
***B01D 71/68*** *(2006.01)* ***B01D 61/02*** *(2006.01)*

(86) Internationale Anmeldenummer:
**PCT/EP2015/061261**

(87) Internationale Veröffentlichungsnummer:
**WO 2015/177281 (26.11.2015 Gazette 2015/47)**

(54) **VERFAHREN ZUR HERSTELLUNG EINER FILTRATIONSMEMBRAN MIT EINEM MITTLEREN MOLEKULAREN CUT-OFF VON<1000 G/MOL**

METHOD FOR PRODUCING A FILTRATION MEMBRANE WITH AN AVERAGE MOLECULAR CUT-OFF OF < 1000 G/MOL

PROCÉDÉ DE FABRICATION D'UNE MEMBRANE DE FILTRATION AYANT UN SEUIL MOLÉCULAIRE MOYEN DE < 1000 G/MOL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.05.2014 EP 14169648**

(43) Veröffentlichungstag der Anmeldung:
**29.03.2017 Patentblatt 2017/13**

(73) Patentinhaber: **LANXESS Deutschland GmbH**
**50569 Köln (DE)**

(72) Erfinder:
- **MECHELHOFF, Martin**
  **50733 Köln (DE)**
- **MARCHETTI, Patrizia**
  **I-20124 Milano (IT)**
- **LIVINGSTON, Andrew**
  **Welwyn Garden City AL8 7JY (GB)**
- **KARINA, Zedda**
  **04229 Leipzig (DE)**

(56) Entgegenhaltungen:
**EP-A1- 1 440 727** **EP-A2- 0 100 552**
**US-A- 4 964 990** **US-A1- 2010 190 965**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 145 627 B1

Printed by Jouve, 75001 PARIS (FR)

## Beschreibung

Die Erfindung betrifft ein Verfahren zur Herstellung einer Filtrationsmembran mit einem mittleren molekularen Cut-Off von < 1000 g/mol.

Filtrationsmembranen mit einem mittleren molekularen Cut-Off von < 1000 g/mol sind aus dem Stand der Technik bekannt und eignen sich insbesondere zur Nanofiltration, d.h. zur Abtrennung von Molekülen mit einer mittleren Molmasse kleiner als 1000 g/mol.

Unterschiedliche Verfahren zur Herstellung von Filtrationsmembranen, die zur Ultrafiltration, Nanofiltration oder Mikrofiltration geeignet sind, sind bekannt.

Ein Verfahren zur Herstellung einer Filtrationsmembran mit Mikrofiltrationseigenschaften ist z.B. aus der US 4,900,449 bekannt. Bei diesem Verfahren wird Polyethersulfon und Polyethylenglykol in N-Methylpyrrolidon oder in Dimethylformamid gelöst und die Mischung auf einem Glasträger oder einem anderen metallfreien Träger aufgetragen, so dass sich die Membran ausbilden kann.

Aus der US 4,964,990 ist ein Verfahren bekannt, bei dem nach der Herstellung der Filtrationsmembran mit Mikrofiltrationseigenschaften durch Präzipitation eines Gemisches aus Polyethersulfon und Polyethylenglykol die entstandene Membran mit Polyvinylalkohol vernetzt wird.

Ein weiteres Verfahren zur Herstellung einer Filtrationsmembran mit Ultrafiltrationseigenschaften ist aus der US 6,056,903 bekannt. In diesem Verfahren wird Polyethersulfon zunächst in einem Lösungsmittel gelöst und ein aliphatisches Glykol hinzugegeben. Die Lösung wird dann auf ein passendes Substrat, wie z.B. einem nicht rostenden Stahl aufgetragen, mit der Atmosphäre in Kontakt gebracht und die Membran dann in einem Präzipitationsbad in Gegenwart eines Glykols präzipitiert.

Filtrationsmembranen werden häufig auch hydrophilisiert, um die Fouling Eigenschaften zu verbessern oder die Performance zu erhöhen. Zur Hydrophilisierung von Filtrationsmembranen werden drei unterschiedliche Vorgehensweisen vorgeschlagen: a) die Modifizierung des Membranpolymeren durch Zugabe von Additiven vor der Herstellung der Filtrationsmembran b) die Modifizierung der Filtrationsmembran durch Zugabe des Additives bei der Herstellung c) und die Modifizierung der Filtrationsmembran mit den Additiven nach der Herstellung (Nachbehandlungsverfahren). Nachbehandlungsverfahren gemäß c) unter Verwendung von Ultrafiltrationsmembranen aus Polyethersulfon mit Polyethylenglykol sind aus H.Susanto et al., Material Science and Engineering C32, 2012, 1759-1766 bekannt. EP1440727 A1 offenbart ein Verfahren zur Erhöhung des Wasserflusses durch Nachbehandlung von Ultrafiltrations- und Mikrofiltrationsmembranen mit z.B. wässrigen Polyethylenglykollösungen.

Zudem existieren Fouling-resistente Polyethersulfonmembranen mit Ultrafiltrationseigenschaften, die unter Verwendung von Poly(etherglykol)methylether methacrylaten hergestellt werden (Peng et al., Bioresource Technology, 102 (2011), 2289-2295 oder Susanto et al., Journal of Membrane Science, 288, 2007, 157-167).

Den vorstehenden Verfahren ist gemeinsam, dass die Filtrationsmembranen nicht die Anforderung an die gewünschte Trennleistung erfüllen.

Filtrationsmembranen, die zur Nanofiltration oder zur Verwendung für die Umkehrosmose geeignet sind, werden üblicherweise über interfaciale Polymerisation hergestellt. Aus der EP 1060785 A1 ist ein Verfahren zur Herstellung einer Nanofiltrationsmembran bekannt, bei dem eine mikroporöse Trägermembran, die z.B. aus Polysulfon oder Polyethersulfon besteht, mit einer wässrigen Lösung aus Bipiperidinderivaten beschichtet wird und dann in Kontakt mit einem polyfunktionalen aromatischen oder zykloaliphatischen Carbonsäurehalogenid gebracht wird, so dass sich eine Bipiperidinpolyamidmembran ausbildet.

Auch aus der US 5,151,901 ist eine Nanofiltrationsmembran bekannt, die durch interfacial Polymerisation einer Lösung aus Polyaminen und Piperazinen auf einer mikroporösen Trägermembran und nachfolgender Behandlung mit Oxidationsmitteln hergestellt wird.

Ein weiteres Verfahren zur Herstellung einer Filtrationsmembran mit Nanofiltrationseigenschaften und Umkehrosmoseeigenschaften ist aus der US 5,922,203 bekannt. Bei diesem Verfahren wird eine wasserdurchlässige Membran mittels interfacialer Polymerisation auf einem mikroporösen Träger, z.B. bestehend aus Polysulfon oder Polyethersulfon, aus derivatisierten Polyaminen hergestellt.

Alle drei Verfahren besitzen die Nachteile, dass sie technisch aufwendig und dadurch kostenintensiv sind und die hergestellten Filtrationsmembranen bei extremen sauren pH Werten nicht genügend beständig sind.

Es bestand daher weiterhin ein Bedürfnis nach einem Verfahren zur Herstellung einer Filtrationsmembran mit Nanofiltrationeigenschaften, das ohne technologischen Aufwand kostengünstig betrieben werden kann.

Überraschend wurde gefunden, dass mit dem erfindungsgemäßen Verfahren, eine Filtrationsmembran mit Nanofiltrationseigenschaften, das heißt mit einem mittleren molekularen Cut-Off < 1000 g/mol, hergestellt werden kann, mit dem die Nachteile des Standes der Technik überwunden werden können und die unter extremen Filtrationsbedingungen, beispielweise bei extremen pH-Werten, eingesetzt werden kann.

Gegenstand der Erfindung ist daher ein Verfahren zur Herstellung einer Filtrationsmembran mit einem mittleren molekularen Cut-Off < 1000 g/mol, bei dem,

a) mindestens eine Filtrationsmembran mit einem mittleren molekularen Cut-Off zwischen 3000 g/mol und 15000 g/mol, enthaltend mindestens ein Textilverbundstoff, der mit mindestens einem Polyethersulfon oder mindestens einem hydrophilisiertem Polyethersulfon, also Polyethersulfone, welche durch den Zusatz von hydrophilen Additiven hydrophilisiert wurden, beschichtet ist, mit einem wässrigen Medium, das einen Wassergehalt von mindestens 99 % besitzt, in Kontakt gebracht wird und

b) die Filtrationsmembran aus Schritt a) mit mindestens einem Poly¬ethylenglykol mit einer mittleren Molmasse zwischen 106 g/mol bis 2000 g/mol in Gegenwart mindestens eines, davon unterschiedlichen, aliphatischen, verzweigten oder unverzweigten, gesättigten einwertigen Alkohols in Kontakt gebracht wird und Polyethylenglykol in einer Menge von 10 Gew.-% bis 40 Gew.-% bezogen auf die Gesamtmenge Polyethylenglykol und Alkohol enthältund die Summe der in Verfahrensschritt b) eingesetzten Menge an Polyethylenglykol und Alkohol > 95 Gew. % bezogen auf die Gesamtmenge der eingesetzten Mischung ist und

c) die Filtrationsmembran aus Schritt b) getrocknet wird.

Als Filtrationsmembran in Verfahrensschritt a.) mit einem mittleren molekularen Cut-Off zwischen 3000 g/mol und 15000 g/mol werden erfindungsgemäß vorzugsweise Filtrationsmembranen enthaltend mindestens ein Textilverbundstoff, der mit mindestens einem Polyethersulfon (PES) oder mit mindestens einem hydrophilisierten Polyethersulfon (PESH) beschichtet ist, eingesetzt.

Als bevorzugtes Polyethersulfon wird erfindungsgemäß Poly(oxy-1,4-phenylsulfonyl-1,4-phenyl) (PES) CAS Nr.: 25608-63-3 eingesetzt.

Hydrophiliserte Polyethersulfone stellen im Allgemeinen Polyethersulfone dar, welche durch den Zusatz weiterer hydrophiler Additive hydrophilisiert wurde. Als Beispiel solcher Additive sind z.B. hydrophile Polymere wie z.B. Polyvinylpyrrolidon oder hydrophile Verbindungen wie z.B. Polyethylenglykole zu nennen. Vorzugsweise werden als hydrophilisierte Polyethersulfone Polyethersulfone eingesetzt, die durch den Zusatz von Polyvinylpyrrolidon oder Polyethylenglykole hydrophilisiert wurden. Vorzugsweise enthalten die hydrophilisierten Polyethersulfone, 5 Gew.-% bis 98 Gew.-% Polyethersulfon und 2 Gew.-% bis 10 Gew.-% hydrophiles Additiv.

Als Textilverbundstoffe können beispielsweise und vorzugsweise Polyolefinen, wie z.B. Polyethylen oder Polypropylen oder Mischungen dieser Verbindungen eingesetzt werden. Bevorzugt werden als Textilverbundstoffe zu Fliesen hergestellte Fasergelege aus Polyethylen und Polypropylen oder aus Gemischen dieser Verbindungen eingesetzt. Beispielsweise und vorzugsweise können die Textilverbundstoffe eine Dicke zwischen 50 und 250 μm aufweisen. Bevorzugt weisen die Textilverbundstoffe eine Dicke zwischen 100 und 200 μm auf.

Als Membran wird erfindungsgemäß das Material bezeichnet, mit dem der Textilverbundstoff beschichtet ist.

Die Membran kann neben Polyethersulfonen ebenfalls weitere Addtive enthalten. Als Additive können z.B. hydrophile Polymere, wie z.B. Polyvinylpyrrolidon oder Polyethylenglykole eingesetzt werden. Bevorzugt werden als Additive Polyvinylpyrrolidone mit einem mittleren Molekulargewicht von 200000 g/mol bis 400000 g/mol oder Polyethylenglykole mit einem mittleren Molekulargewicht von 200 bis 35000 g/mol eingesetzt.

Falls die Membran Gemische aus Polyethersulfonen und weiteren Addtiven enthält, enthält die Membran bevorzugt 5 Gew.-% bis 90 Gew.-% und besonders bevorzugt 2 Gew.-% bis 10 Gew.-% Additiv.

Besonders bevorzugt enthält die Membran Polyethersulfon oder hydrophilisiertes Polyethersulfon in einer Menge > 98 Gew. % bezogen auf die Gesamtmenge der Membran. Noch weiter bevorzugt enthält die Membran > 98 Gew. % Polyethersulfon mit einem mittleren Molekulargewicht zwischen 40000 und 100000 g/mol bezogen auf die Gesamtmenge der Membran oder > 98 Gew.-% hydrophilisiertes Polyethersulfon mit einem mittleren Molekulargewicht zwischen 40000 und 100000 g/mol bezogen auf die Gesamtmenge der Membran.

Die im Rahmen des erfindungsgemäßen Verfahrens eingesetzten Filtrationsmembranen mit einem mittleren molekularen Cut-Off zwischen 3000 g/mol und 15000 g/mol, können z.B. von der Fa. Microdyn Nadir, Germany bezogen werden. Beispielsweise und vorzugsweise können als Filtrationsmembranen mit einem mittleren molekularen Cut-Off zwischen 3000 g/mol und 15000 g/mol, die Membranen NADIR® UH004 und NADIR® UP 005 eingesetzt werden. Bevorzugt wird als Filtrationsmembran eine Filtrationsmembran enthaltend hydrophilisertes Polyethersulfon mit einem mittleren molekularen Cut-Off zwischen 3000 g/mol und 15000 g/mol eingesetzt. Besonders bevorzugt wird die Filtrationsmembran NADIR® UH004 von der Fa. Microdyn Nadir in dem erfindungsgemäßen Verfahren als Edukt eingesetzt.

Filtrationsmembranen enthaltend ein hydrophilisiertes Polyethersulfon, können z.B. so hergestellt werden, dass ein Polyethersulfon in einem Lösungsmittel gelöst wird und dann mit einem hydrophilen Additiv vermischt wird. Die Polymerlösung wird dann auf ein Trägermaterial, wie z.B. auf ein Textilverbundstoff aufgebracht, wobei sich eine Membran durch Verdunstung des Lösungsmittels ausbildet. Filtrationsmembranen enthaltend Polyethersulfon können ebenfalls durch Lösung des Polyethersulfons in einem geeigneten Lösungsmittel und dann durch Aufbringen und Trocknung dieser Lösung auf einem geeigneten Träger hergestellt werden. Neben diesem als dip-coating, z.B. aus H. Susanto et al., Material Science and Engineering C32, 2012, 1759-1766 bekannten Verfahren kann aber die Herstellung der Filtrationsmembranen ebenfalls über die, z.B. aus der US 4,872,984 bekannten Verfahren zur interfacialen Polymerisation erfolgen.

Zur Charakterisierung von Filtrationsmembranen wird üblicherweise ebenfalls der Salzrückhalt R herangezogen.

$$R = \frac{w(Feed) - w(Permeat)}{w(Feed)} \times 100 \quad [\%]$$

wobei w den Massenanteil eines beliebigen Stoffes kennzeichnet.

Der Rückhalt beschreibt den Prozentanteil einer abgetrennten Substanz im Permeat (lateinisch "permeare" = durchgehen), bezogen auf die Konzentration im Feed. Er ist neben der Temperatur auch vom Transmembrandruck bzw. -fluss und der Konzentration der Ausgangslösung abhängig. Das Retentat (lateinisch "retenere" = zurückhalten) beinhaltet die im Vergleich zum Feed erhöhte Konzentration der abzutrennenden Substanz.

Der Salzrückhalt, der im erfindungsgemäßen Verfahren eingesetzten und im erfindungsgemäßen Verfahren hergestellten Filtrationsmembranen, wird mit einer wässrigen 2000 ppm Magnesiumsulfatlösung bei einem Druck von 10 bar und einem Feedvolumenstrom von 4 l/h in einer Querstromfiltrationseinheit ("Crossflow Filtration") bei einer Temperatur von 25 °C gemessen. Die Messung wird bis zur Einstellung des Gleichgewichtes im Durchfluss durchgeführt.

Die im erfindungsgemäßen Verfahren in Verfahrensschritt a.) eingesetzten Filtrationsmembranen haben üblicherweise eine Salzrückhalt von 0% bis 20 % bei einem Durchfluss von 40 bis 1000 $l/m^2h$. Bevorzugt weisen die im erfindungsgemäßen Verfahren eingesetzten Filtrationsmembranen einen Salzrückhalt von 5% bis 15 % bei einem Durchfluss von 50 bis 70 $l/m^2h$ auf.

Das in Verfahrensschritt a) eingesetzte wässrige Medium hat einen Wassergehalt von mindestens 99 %, bevorzugt hat das wässrige Medium einen Wassergehalt von 99,9 %. Beispielsweise wird die Reinheit des wässrigen Mediums über die Leitfähigkeit bestimmt. In diesem Fall hat das wässrige Medium bevorzugt eine Leitfähigkeit von $\leq$ 10 $\mu$S/cm bei 25 °C. Besonders bevorzugt hat das wässrige Medium eine Leitfähigkeit $\leq$ 1 $\mu$S/cm bei 25 °C.

Im Schritt b) des erfindungsgemäßen Verfahren werden Polyethylenglykole mit einer Molmasse von 106 bis 2000 g/mol eingesetzt. Besonders bevorzugt werden im Schritt b) des erfindungsgemäßen Verfahren Polyethylenglykole mit einer Molmasse von 106 bis 600 g/mol eingesetzt. Ganz besonders bevorzugt werden Polyethylenglykole der Fomel (I)

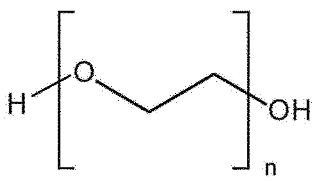

(I)

mit n = 2 bis 10

im erfindungsgemäßen Verfahren eingesetzt.

Als Alkohole in Schritt b) des erfindungsgemäßen Verfahrens können alle einwertigen, verzweigten oder unverzweigten, gesättigten, aliphatischen Alkohole eingesetzt werden. Beispielsweise und vorzugsweise werden als Alkohole in Schritt b) des erfindungsgemäßen Verfahrens einwertige Alkohole, wie z.B. Methanol, Ethanol, 1-Propanol, 2-Propanol, n-, i-, t-Butanol, Pentan-1-ol, Pentan-2-ol, Pentan-3-ol, Hexanol, Heptanol, Octanol, Nonanol, 2-Methylpropan-1-ol, 2-Methylpropan-2-ol, Pentan-2-ol, Pentan-3-ol, 2-Methylbutan-1-ol, 3-Methylbutan-1-ol, 2-Methylbutan-2-ol, 3-Methylbutan-2-ol, 2,2-Dimethylpropan-1-ol oder Gemische dieser Alkohole eingesetzt. Bevorzugt werden als Alkohole Ethanol, 1-Propanol, 2-Propanol, n-, i-, t-Butanol, Pentan-1-ol, Pentan-2-ol oder Pentan-3-ol oder Mischungen dieser Alkohole eingesetzt. Besonders bevorzugt werden als Alkohole 1-Propanol, 2-Propanol und Ethanol oder Mischungen dieser Alkohole eingesetzt.

In Verfahrensschritt b) wird das Polyethylenglykol in einer Menge von 10 Gew.-% bis 40 Gew.-% in Verfahrensschritt b) bezogen auf die Gesamtmenge Polyethylenglykol und Alkohol eingesetzt.

Vorzugsweise ist die Summe der in Verfahrensschritt b) eingesetzten Menge an Polyethylenglykol und Alkohol > 95 Gew. % bezogen auf die Gesamtmenge der eingesetzten Mischung. Besonders bevorzugt ist die Summe der in Verfahrensschritt b) eingesetzten Menge an Polyethylenglykol und Alkohol > 98 Gew. % bezogen auf die Gesamtmenge der eingesetzten Mischung. Der verbleibende Rest in der Mischung kann beispielsweise und vorzugsweise Wasser oder organische Lösungsmittel, wie z.B. 2-N-Methyl-pyrrolidon oder Dimethylformamid sein.

Das Volumen der eingesetzten Mischung enthaltend Polyethylenglykol und Alkohol im Verfahrensschritt b) ist nicht relevant, wobei natürlich sichergestellt sein muss, dass das Volumen der eingesetzten Mischung so groß ist, dass die Membran vollständig behandelt werden kann.

Der Rahmen der Erfindung umfasst alle oben stehenden und im Folgenden aufgeführten, allgemeinen oder in Vorzugsbereichen genannten Parameter und Erläuterungen untereinander, also auch zwischen den jeweiligen Bereichen und Vorzugsbereichen in beliebiger Kombination.

Das erfindungsgemäße Verfahren wird bevorzugt so durchgeführt, dass die Filtrationsmembran in Schritt a) mit der wässrigen Lösung abgespült wird. Genauso gut könnte die Membran aber ebenfalls in die wässrige Lösung gelegt oder hindurchgezogen werden. Bevorzugt wird die Filtrationsmembran in Schritt a) mit der wässrigen Lösung abgespült. Im Allgemeinen dauert die Wässerung im Bad zwischen 10 s und 600 s. Sie kann aber ebenfalls auch länger oder kürzer erfolgen. Bevorzugt erfolgt die Behandlung der Filtrationsmembran in Schritt a) für eine Dauer von 10s bis 350s. Bevorzugt erfolgt Schritt a) bei einer Temperatur zwischen 20 °C bis 25 °C. Schritt a) kann aber ebenfalls bei anderen, höheren oder niedrigeren Temperaturen durchgeführt werden.

Schritt b) kann beispielsweise so durchgeführt werden, dass die gemäß Schritt a) behandelte Filtrationsmembran in die präparierte Mischung enthaltend Polyethylenglykol und Alkohol gegeben wird. Ebenso könnte aber auch die Mischung enthaltend Polyethylenglykol und dem/den Alkohol(en) auf die Filtrationsmembran aus Schritt a), beispielsweise durch Besprühen, aufgetragen werden. Bevorzugt wird Schritt b) so durchgeführt, dass die gemäß Schritt a) behandelte Filtrationsmembran in die Mischung aus Polyethylenglykol und Alkohol eingelegt oder hindurchgezogen wird. Auch Schritt b) kann bei unterschiedlichen Temperaturen durchgeführt werden, beispielsweise kann die Filtrationsmembran bei der Behandlung auch erwärmt werden.

Bevorzugt erfolgt Schritt b) ebenfalls bei 20 °C bis 25 °C. Die Filtrationsmembran wird für einen Zeitraum von beispielsweise und vorzugsweise 1 min bis 15 min mit dem Gemisch aus Polyethylenglykol und Alkohol in Schritt b) behandelt. Bevorzugt wird die Filtrationsmembran in Schritt b) für einen Zeitraum von 2 min bis 6 min behandelt. Danach kann die Filtrationsmembran beispielsweise aus der Mischung herausgenommen werden und in einem Schritt c) getrocknet werden. Ebenso könnte aber ebenfalls die Lösung abgegossen werden und dann die Filtrationsmembran in einem Schritt c) getrocknet werden. Bevorzugt wird die Filtrationsmembran aus der Mischung herausgenommen und in einem Schritt c) getrocknet. Die Trocknung der Membran gemäß Schritt c) kann an der Luft, aber auch unter Schutzgas, wie z.B. unter Stickstoff oder Argon oder auch im Vakuum erfolgen. Bevorzugt erfolgt die Trocknung der Filtrationsmembran in Schritt c) an der Luft. Auch in Schritt c) kann die Trocknung durch Erwärmen unterstützt werden. Die Trocknung kann aber ebenfalls bei anderen Temperaturen, wie z.B. bei Raumtemperatur erfolgen oder es könnte eine Vortrocknung bei geringeren Temperaturen erfolgen und dann die Temperatur erhöht werden. Bevorzugt erfolgt die Trocknung der Filtrationsmembran in Schritt c) bei einer Temperatur von 40 °C bis 70 °C, besonders bevorzugt erfolgt die Trocknung in Schritt c) bei einer Temperatur zwischen 45 °C und 65 °C. Zum Erreichen dieser Temperatur kann die Trocknung in Schritt c) beispielsweise und vorzugsweise in einem Umlufttrockenschrank erfolgen. Die Trocknung in Schritt c) erfolgt beispielweise innerhalb eines Zeitraumes von 1 bis 15 min. Sie kann aber auch länger oder kürzer erfolgen. Bevorzugt erfolgt die Trocknung in Schritt c) in einem Zeitraum von 1 bis 15 min, besonders bevorzugt in einem Zeitraum von 4 bis 11 min.

Die gemäß des erfindungsgemäßen Verfahrens hergestellte Filtrationsmembran weist einen mittleren molekularen Cut-Off < 1000 g/mol auf. Bevorzugt weist die Filtrationsmembran einen mittleren molekularen Cut-Off zwischen 200 g/mol und < 1000 g/mol auf. Besonders bevorzugt weist die Filtrationsmembran einen mittleren molekularen Cut-Off zwischen 400 g/mol und < 1000 g/mol auf.

Die gemäß des erfindungsgemäßen Verfahrens hergestellte Filtrationsmembran weist zudem einen hohen Salzrückhalt auf. Bevorzugt weist die gemäß des erfindungsgemäßen Verfahrens hergestellte Filtrationsmembran einen Salzrückhalt größer 50 % auf. Besonders bevorzugt weist die gemäß des erfindungsgemäßen Verfahrens hergestellte Filtrationsmembran einen Salzrückhalt von 50% bis 99 % bei einem Durchfluss von 5 bis 50 $l/m^2/h$ auf. Besonders bevorzugt weist die gemäß des erfindungsgemäßen Verfahrens hergestellte Filtrationsmembran einen Salzrückhalt > 80 % auf bei einem Durchfluss von 6 bis 30 $l/m^2/h$ auf.

Zudem weist die erfindungsgemäße Membran eine hohe Stabilität bei niedrigen pH Werten auf. Daher verändert sich der Wert des Salzrückhaltes um weniger als 5 % innerhalb eines Zeitraumes von 1 Woche bei pH-Werten < 1 gemessen bei 25°C.

Ganz besonders bevorzugt weist die gemäß des erfindungsgemäßen Verfahrens hergestellte Filtrationsmembran einen mittleren molekularen Cut-Off zwischen 200 g/mol und < 1000 g/mol und einen Salzrückhalt zwischen 80 % und 99 % bei einem Durchfluss von 6 bis 30 $l/m^2/h$ auf. Noch weiter bevorzugt weist die gemäß des erfindungsgemäßen Verfahrens hergestellte Filtrationsmembran einen mittleren molekularen Cut-Off zwischen 200 g/mol und < 1000 g/mol und einen Salzrückhalt zwischen 95 % und 99 % bei einem Durchfluss von 6 bis 15 $l/m^2/h$ auf.

Die gemäß des erfindungsgemäßen Verfahrens hergestellten Filtrationsmembranen sind insbesondere geeignet zur Trennung von Molekülen mit einer Molmasse < 1000 g/mol aus wässrigen Lösungen bei pH-Werten < 1 gemessen bei 25 °C.

Mit dem erfindungsgemäßen Verfahren lassen sich Filtrationsmembranen mit Nanofiltrationseigenschaften kostengünstig bereitstellen. Zudem kann auf die Verwendung technisch aufwendiger, energieintensiver Produktionsverfahren für die Herstellung von Nanofiltrationsmembranen verzichtet werden.

Nachstehend wird die Erfindung anhand von Beispielen näher erläutert:

## BEISPIELE

### Beispiel 1

Eine Filtrationsmembran, umfassend einen Textilverbundstoff, der mit einem hydrophilisiertem Polyethersulfon (PESH) beschichtet ist, Typ UH004 der Firma Microdyn Nadir, wurde einer Behandlung aus 4 Schritten unterzogen.

1. Die Oberfläche der Membran wurde mit deionisiertem Wasser unter Verwendung einer Spritzflasche für 30 s abgespült.

2. Danach wurde die abgespülte Membran in einer Lösung aus 20 Gew.-% Polyethylenglykol (200 g/mol) in 2-Propanol für eine Dauer von 3 Minuten eingelegt, sodass sie vollständig in die Lösung eingetaucht war. Während dieses Imprägniervorgangs wurde die Lösung abgedeckt, um ein Verdampfen des Lösungsmittels zu vermeiden.

3. Anschließend wurde die Membran aus dem 2-Propanol-Polyethylenglykol-Bad entnommen und für 10 Minuten unter Atmosphärenbedingungen abgelegt. Dabei war die Membran durch einen Deckel abgedeckt.

4. Abschließend wurde die Membran in einem Umlufttrockenschrank bei 50°C für 10 Minuten getrocknet.

Vor und nach dieser Behandlung wurden die Membranen mit einer wässrigen Lösung von 2000 ppm $MgSO_4$ bei einem Druck von 10 bar und einem Feedvolumenstrom von 4 l/h in einer Querstromfiltrationszelle auf ihren Rückhalt und Durchfluss getestet. Tabelle 1 zeigt das Ergebnis der Messung nach einer Messdauer von ca. 4 Stunden, als ein Gleichgewichtszustand sicher erreicht war.

**Tabelle 1**

| | **vor der Behandlung** | | **nach der Behandlung** | |
|---|---|---|---|---|
| Membran Nr. | Durchfluss / $l/m^2h$ | Rückhalt / % | Durchfluss / $l/m^2h$ | Rückhalt / % |
| 1 | 55,0 | 11,7 | 7,9 | 98,9 |

### Beispiel 2

Eine Filtrationsmembran, umfassend einen Textilverbundstoff, der mit einem hydrophilisiertem Polyethersulfon (PESH) beschichtet ist, Typ UH004 der Firma Microdyn Nadir, wurde einer Behandlung aus 3 Schritten unterzogen.

1. Die Ober- und Unterseite der Membran wurde mit deionisiertem Wasser unter Verwendung eines Wasserschlauchs für je 30 s abgespült.

2. Danach wurde die abgespülte Membran in einer Lösung aus 20 Gew.-% Polyethylenglykol (200 g/mol) in Ethanol für eine Dauer von 3 Minuten eingelegt, sodass sie vollständig in die Lösung eingetaucht war. Während dieses Imprägniervorgangs wurde die Lösung abgedeckt, um ein Verdampfen des Lösungsmittels zu vermeiden.

3. Abschließend wurde die Membran in einem Umlufttrockenschrank bei 60°C für 5 Minuten getrocknet.

Vor und nach dieser Behandlung wurden die Membranen mit einer wässrigen Lösung von 2000 ppm $MgSO_4$ bei einem Druck von 10 bar und einem Feedvolumenstrom von 4 l/h in einer Querstromfiltrationszelle auf ihren Rückhalt und Durchfluss getestet. Tabelle 2 zeigt das Ergebnis der Messung nach einer Messdauer von ca. 4 Stunden, als ein Gleichgewichtszustand sicher erreicht war.

**Tabelle 2**

| | **vor der Behandlung** | | **nach der Behandlung** | |
|---|---|---|---|---|
| Membran Nr. | Durchfluss / $l/m^2h$ | Rückhalt / % | Durchfluss / $l/m^2h$ | Rückhalt / % |
| 2 | 53,6 | 13,3 | 4,0 | 99,1 |

**Beispiel 3**

Eine Filtrationsmembran, umfassend einen Textilverbundstoff, der mit einem Polyethersulfon (PES) beschichtet ist, Typ UP005 der Firma Microdyn Nadir, wurde einer Behandlung aus 3 Schritten unterzogen.

1. Die Ober- und Unterseite der Membran wurde mit deionisiertem Wasser unter Verwendung eines Wasserschlauchs für je 30 s abgespült.

2. Danach wurde die abgespülte Membran in einer Lösung aus 20 Gew.-% Polyethylenglykol (200 g/mol) in Ethanol für eine Dauer von 3 Minuten eingelegt, sodass sie vollständig in der Lösung eingetaucht war. Während dieses Vorgangs wurde die Lösung abgedeckt, um ein Verdampfen des Lösungsmittels zu vermeiden.

3. Abschließend wurde die Membran in einem Umlufttrockenschrank bei 50°C für 10 Minuten getrocknet.

Vor und nach dieser Behandlung wurden die Membranen mit einer wässrigen Lösung von 2000 ppm $MgSO_4$ bei einem Druck von 10 bar und einem Feedvolumenstrom von 4 l/h in einer Querstromfiltrationszelle auf ihren Rückhalt und Durchfluss getestet. Tabelle 3 zeigt das Ergebnis der Messung nach einer Messdauer von ca. 4 Stunden, als ein Gleichgewichtszustand sicher erreicht war.

**Tabelle 3**

| | **vor der Behandlung** | | **nach der Behandlung** | |
|---|---|---|---|---|
| Membran Nr. | Durchfluss / $l/m^2h$ | Rückhalt / % | Durchfluss / $l/m^2h$ | Rückhalt / % |
| 3 | 235,0 | 9,3 | 8,5 | 98,3 |

**Beispiel 4**

Eine Filtrationsmembran, umfassend einen Textilverbundstoff, der mit einem hydrophilisiertem Polyethersulfon (PESH) beschichtet ist, Typ UH004 der Firma Microdyn Nadir, wurde einer Behandlung aus 3 Schritten unterzogen, um sie anschließend auf ihre Stabilität in hochkonzentrierter Säure zu testen.

1. Die Ober- und Unterseite der Ausgangsmembran wurde für eine Dauer von 5 Minuten in ein mit deionisiertem Wasser gefülltes Wasserbad gelegt.

2. Danach wurde die so behandelte Membran in eine Lösung aus 20 Gew.-% Polyethylenglykol (200 g/mol) in Ethanol für eine Dauer von 5 Minuten eingelegt, sodass sie vollständig in der Lösung eingetaucht war. Während dieses Vorgangs wurde die Lösung abgedeckt, um ein Verdampfen des Lösungsmittels zu vermeiden.

3. Abschließend wurde die Membran in einem Umlufttrockenschrank bei 60°C für 5 Minuten getrocknet.

Die so hergestellte Membran wurde mit einer wässrigen Lösung von 2000 ppm $MgSO_4$ bei einem Druck von 10 bar und einem Feedvolumenstrom von 4 l/h in einer Querstromfiltrationszelle auf ihren Rückhalt und Durchfluss getestet. Das Ergebnis ist in Tabelle 4, erste Spalte, aufgeführt.

Eine zweite nach dem oben beschriebenen Verfahren hergestellte Membran wurde für eine Dauer von 7 Tagen bei Raumtemperatur in einer wässrigen Lösung von 20 Gew.-% $H_2SO_4$ eingelegt. Um ein Verdampfen der Lösung sowie Einflüsse von außen zu vermeiden, war das Gefäß, in dem die Membran eingelegt war, fest verschlossen.

Nach dieser Behandlung wurde die Membran mit deionisiertem Wasser gespült und mit einer wässrigen Lösung von 2000 ppm $MgSO_4$ bei einem Druck von 10 bar und einem Feedvolumenstrom von 4 l/h in einer Querstromfiltrationszelle auf ihren Rückhalt und Durchfluss getestet. Das Ergebnis ist in Tabelle 4, zweite Spalte, aufgeführt.

**Tabelle 4**

| | **ohne das Einlegen in saure Lösung** | | **nach dem Einlegen in 20 Gew.-% $H_2SO_4$** | |
|---|---|---|---|---|
| Membran Nr. | Durchfluss / $l/m^2h$ | Rückhalt / % | Durchfluss / $l/m^2h$ | Rückhalt / % |
| 4 | 4,1 | 99,3 | 4,8 | 97,4 |

Im Ergebnis ist zu erkennen, dass nach dem Einlegen der Nanofiltrationsmembran in eine stark saure Lösung kein signifikanter Abfall von Durchfluss und Rückhalt zu verzeichnen war. Damit zeigt die Membran eine außerordentlich gute Stabilität in extrem sauren Medien.

**Beispiel 5**

Zwei Filtrationsmembranen (Membran A und Membran B), umfassend einen Textilverbundstoff, der mit einem hydrophilisiertem Polyethersulfon (PESH) beschichtet ist, Typ UH004 der Firma Microdyn Nadir, wurden zwei verschiedenen Behandlungen aus 3 Schritten unterzogen.

1. Die Oben- und Unterseite der Membranen wurden mit deionisiertem Wasser unter Verwendung einer Spritzflasche für je 30 s abgespült.

2. Danach wurden die abgespülten Membranen je in einer Lösung aus 22 Gew.-% Polyethylenglykol (200 g/mol) in deionisiertem Wasser (Membran A) oder 22 Gew.-% Polyethylenglykol (200 g/mol) in Ethanol (Membran B) für eine Dauer von 3 Minuten eingelegt, sodass sie vollständig in die Lösung eingetaucht waren. Während dieses Impägniervorgangs wurden die Lösungen Abgedeckt, um ein Verdampfen des Lösungsmittels zu vermeiden.

3. Abschließend wurden die Membranen in einem Umlufttrockenschrank bei 50°C für 10 Minuten getrocknet.

Nach dieser Behandlung wurden die Membranen mit einer wässrigen Lösung von 2000 ppm $MgSO_4$ bei einem Druck von 10 bar und einem Feedvolumenstrom von 4 l/h in einer Querstromfiltrationszelle auf ihren Rückhalt und Durchfluss getestet. Tabelle 5 zeigt das Ergebnis der Messung nach einer Messdauer von ca. 4 Stunden, als ein Gleichgewichtszustand sicher erreicht war.

**Tabelle 5**

| | **Membran A - PEG im Wasser** | | **Membran B - PEG in Ethanol** | |
|---|---|---|---|---|
| Membran Nr. | Durchfluss / l/m$^2$h | Rückhalt / % | Durchfluss / l/m$^2$h | Rückhalt / % |
| 5 | 128,7 | 10,8 | 5,6 | 97,0 |

**Patentansprüche**

1. Verfahren zur Herstellung einer Filtrationsmembran mit einem mittleren molekularen Cut-Off < 1000 g/mol, **dadurch gekennzeichnet, dass**

   a) mindestens eine Filtrationsmembran mit einem mittleren molekularen Cut-Off zwischen 3000 g/mol und 15000 g/mol, enthaltend mindestens ein Textilverbundstoff, der mit mindestens einem Polyethersulfon oder mindestens einem hydrophilisiertem Polyethersulfon, also Polyethersulfone, welche durch den Zusatz von hydrophilen Additiven hydrophilisiert wurden, beschichtet ist, mit einem wässrigen Medium, das einen Wassergehalt von mindestens 99 % besitzt, in Kontakt gebracht wird und
   b) die Filtrationsmembran aus Schritt a) mit mindestens einem Polyethylenglykol mit einer mittleren Molmasse zwischen 106 g/mol bis 2000 g/mol in Gegenwart mindestens eines, davon unterschiedlichen, aliphatischen, verzweigten oder unverzweigten, gesättigten einwertigen Alkohols in Kontakt gebracht wird und Polyethylenglykol in einer Menge von 10 Gew.-% bis 40 Gew.-% bezogen auf die Gesamtmenge Polyethylenglykol und Alkohol enthält und die Summe der in Verfahrensschritt b) eingesetzten Menge an Polyethylenglykol und Alkohol > 95 Gew. % bezogen auf die Gesamtmenge der eingesetzten Mischung ist und
   c) die Filtrationsmembran aus Schritt b) getrocknet wird.

2. Verfahren gemäß Anspruch 1, **dadurch gekennzeichnet, dass** die in Verfahrensschritt a.) eingesetzte Filtrationsmembran einen Salzrückhalt zwischen 5 % und 15 % aufweist, wobei dieser Salzrückhalt mit einer wässrigen 2000 ppm $MgSO_4$ in einer Querstromfiltrationseinheit bei einem Feedvolumenstrom von 4 l/h und einem Feeddruck von 10 bar, bei 25°C gemessen wird.

3. Verfahren gemäß mindestens einem der Ansprüche 1 bis 2, **dadurch gekennzeichnet, dass** die Leitfähigkeit der in Verfahrensschritt a) eingesetzten wässrigen Medium $\leq 10\ \mu S/cm$ bei 25 °C beträgt.

4. Verfahren gemäß mindestens einem der Ansprüche 1 bis 3, **dadurch gekennzeichnet, dass** die Filtrationsmembran zwischen 10 s und 600 s, bevorzugt zwischen 10 s und 350 s, in Schritt a) in Kontakt gebracht wird.

5. Verfahren gemäß mindestens einem der Ansprüche 1 bis 4, **dadurch gekennzeichnet, dass** als Alkohole in Verfahrensschritt b) einwertige, aliphatische, gesättigte Alkohole, bevorzugt, Methanol, Ethanol, 1-Propanol, 2-Propanol, n-Butanol, i-Butanol, t-Butanol, Pentan-1-ol, Pentan-2-ol oder Pentan-3-ol oder Gemische dieser Alkohole eingesetzt werden.

6. Verfahren gemäß mindestens einem der Ansprüche 1 bis 5, **dadurch gekennzeichnet, dass** die in Schritt b) eingesetzten Polyethylengylkole eine mittlere Molmasse von 106 g/mol bis 600 g/mol besitzen.

7. Verfahren gemäß mindestens einem der Ansprüche 1 bis 6, **dadurch gekennzeichnet, dass** in Schritt b) Polyethylenglykole der Formel (I)

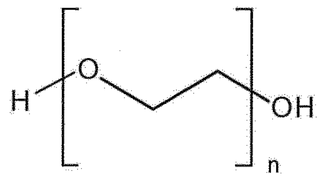

(I)

mit n=2 bis 10 eingesetzt werden.

8. Verfahren gemäß mindestens einem der Ansprüche 1 bis 7, **dadurch gekennzeichnet, dass** in Verfahrensschritt b) die Filtrationsmembran für eine Zeitdauer von 2 min bis 6 min behandelt wird.

9. Verfahren gemäß mindestens einem der Ansprüche 1 bis 8, **dadurch gekennzeichnet, dass** in Verfahrensschritt c) die Trocknung der Filtrationsmembran bei einer Temperatur von 40 °C bis 70 °C, bevorzugt bei 50 °C bis 65 °C, vorgenommen wird.

10. Verfahren gemäß mindestens einem der Ansprüche 1 bis 9, **dadurch gekennzeichnet, dass** in Verfahrensschritt c) die Trocknung der Filtrationsmembran innerhalb eines Zeitraumes von 1 bis 15 min durchgeführt wird.

11. Verfahren gemäß mindestens einem der Ansprüche 1 bis 10, **dadurch gekennzeichnet, dass** die hergestellte Filtrationsmembran einen mittleren molekularen Cut-Off zwischen 200 g/mol und < 1000 g/mol und einen Salzrückhalt zwischen 80 % und 99 % bei einem Durchfluss von 6 bis 30 $l/m^2/h$ aufweist.

## Claims

1. Process for preparing a filtration membrane having an average molecular cut-off < 1000 g/mol, **characterized in that**

   a) at least one filtration membrane having an average molecular cut-off between 3000 g/mol and 15 000 g/mol, comprising at least one bonded textile fabric coated with at least one polyether sulphone or with at least one hydrophilicized polyether sulphone, i.e. polyether sulphones which have been hydrophilicized by the addition of hydrophilic additives, is contacted with an aqueous medium having a water content of not less than 99%, and
   b) the filtration membrane from step a) is contacted with at least one polyethylene glycol having an average molar mass between 106 g/mol to 2000 g/mol in the presence of at least one different aliphatic, branched or unbranched, saturated, monohydric alcohol and contains polyethylene glycol in an amount ranging from 10 wt% to 40 wt%, based on the combined amount of polyethylene glycol and alcohol, and the sum total of polyethylene glycol and alcohol used in process step b) is > 95 wt%, based on the overall amount of the mixture used, and
   c) the filtration membrane from step b) is dried.

2. Process according to Claim 1, **characterized in that** the filtration membrane used in process step a) has a salt retention between 5% and 15%, wherein this salt retention is measured at 25°C with an aqueous 2000 ppm $MgSO_4$ solution in a crossflow filtration unit at a feed volume flow of 4 1/h and a feed pressure of 10 bar.

3. Process according to at least one of Claims 1 to 2, **characterized in that** the conductivity of the aqueous medium used in process step a) is ≤ 10 μS/cm at 25°C.

4. Process according to at least one of Claims 1 to 3, **characterized in that** the filtration membrane is contacted for between 10 s and 600 s, preferably for between 10 s and 350 s, in step a).

5. Process according to at least one of Claims 1 to 4, **characterized in that** the alcohol(s) employed in process step b) comprise(s) monohydric aliphatic saturated alcohols, preferably methanol, ethanol, 1-propanol, 2-propanol, n-butanol, i-butanol, t-butanol, 1-pentanol, 2-pentanol or 3-pentanol or mixtures thereof.

6. Process according to at least one of Claims 1 to 5, **characterized in that** the polyethylene glycols used in step b) have an average molar mass of 106 g/mol to 600 g/mol.

7. Process according to at least one of Claims 1 to 6, **characterized in that** step b) utilizes polyethylene glycols of formula (I)

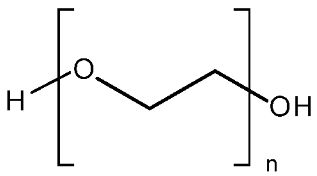

(I

where n is from 2 to 10.

8. Process according to at least one of Claims 1 to 7, **characterized in that** the filtration membrane is treated in process step b) for a period extending from 2 min to 6 min.

9. Process according to at least one of Claims 1 to 8, **characterized in that** the filtration membrane is dried in process step c) at a temperature of 40°C to 70°C, preferably at 50°C to 65°C.

10. Process according to at least one of Claims 1 to 9, **characterized in that** the filtration membrane is dried in process step c) within a period extending from 1 to 15 min.

11. Process according to at least one of Claims 1 to 10, **characterized in that** the filtration membrane obtained has an average molecular cut-off between 200 g/mol and < 1000 g/mol and a salt retention between 80% and 99% coupled with a flux of 6 to 30 $1/m^2/h$.

## Revendications

1. Procédé de fabrication d'une membrane de filtration ayant une valeur seuil moléculaire moyenne < 1 000 g/mol, **caractérisé en ce que**

a) au moins une membrane de filtration ayant une valeur seuil moléculaire moyenne comprise entre 3 000 g/mol et 15 000 g/mol, contenant au moins un matériau composite textile, qui est revêtu avec au moins une polyéther-sulfone ou au moins une polyéther-sulfone hydrophilisée, c'est-à-dire des polyéther-sulfones qui ont été hydrophilisées par l'ajout d'additifs hydrophiles, est mise en contact avec un milieu aqueux, qui présente une teneur en eau d'au moins 99 %, et
b) la membrane de filtration de l'étape a) est mise en contact avec au moins un polyéthylène glycol ayant une masse molaire moyenne comprise entre 106 g/mol et 2 000 g/mol en présence d'au moins un alcool monovalent saturé aliphatique, ramifié ou non ramifié, différent de celui-ci, et contient du polyéthylène glycol en une quantité de 10 % en poids à 40 % en poids, par rapport à la quantité totale de polyéthylène glycol et d'alcool, et la somme de la quantité de polyéthylène glycol et d'alcool utilisée à l'étape de procédé b) est > 95 % en poids, par rapport à la quantité totale du mélange utilisé, et
c) la membrane de filtration de l'étape b) est séchée.

2. Procédé selon la revendication 1, **caractérisé en ce que** la membrane de filtration utilisée à l'étape de procédé a)

présente une rétention des sels comprise entre 5 % et 15 %, cette rétention des sels étant mesurée avec un $MgSO_4$ aqueux à 2 000 ppm dans une unité de filtration à courant transversal à un débit volumique d'alimentation de 4 1/h et une pression d'alimentation de 10 bar, à 25 °C.

**3.** Procédé selon au moins l'une quelconque des revendications 1 à 2, **caractérisé en ce que** la conductivité du milieu aqueux utilisé à l'étape de procédé a) est ≤ 10 pS/cm à 25 °C.

**4.** Procédé selon au moins l'une quelconque des revendications 1 à 3, **caractérisé en ce que** la membrane de filtration est mise en contact entre 10 s et 600 s, de préférence entre 10 s et 350 s, à l'étape a).

**5.** Procédé selon au moins l'une quelconque des revendications 1 à 4, **caractérisé en ce que** des alcools saturés aliphatiques monovalents sont utilisés en tant qu'alcools à l'étape de procédé b), de préférence le méthanol, l'éthanol, le 1-propanol, le 2-propanol, le n-butanol, l'i-butanol, le t-butanol, le pentan-1-ol, le pentan-2-ol ou le pentan-3-ol ou des mélanges de ces alcools.

**6.** Procédé selon au moins l'une quelconque des revendications 1 à 5, **caractérisé en ce que** les polyéthylène glycols utilisés à l'étape b) présentent une masse molaire moyenne de 106 g/mol à 600 g/mol.

**7.** Procédé selon au moins l'une quelconque des revendications 1 à 6, **caractérisé en ce que** des polyéthylène glycols de la formule (I) :

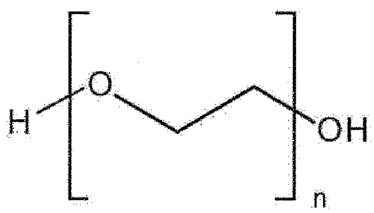

(I)

avec n = 2 à 10, sont utilisés à l'étape b).

**8.** Procédé selon au moins l'une quelconque des revendications 1 à 7, **caractérisé en ce que** la membrane de filtration est traitée à l'étape de procédé b) pendant une durée de 2 minutes à 6 minutes.

**9.** Procédé selon au moins l'une quelconque des revendications 1 à 8, **caractérisé en ce que** le séchage de la membrane de filtration à l'étape de procédé c) est réalisé à une température de 40 °C à 70 °C, de préférence de 50 °C à 65 °C.

**10.** Procédé selon au moins l'une quelconque des revendications 1 à 9, **caractérisé en ce que** le séchage de la membrane de filtration à l'étape de procédé c) est réalisé en une durée de 1 à 15 minutes.

**11.** Procédé selon au moins l'une quelconque des revendications 1 à 10, **caractérisé en ce que** la membrane de filtration fabriquée présente une valeur seuil moléculaire moyenne comprise entre 200 g/mol et < 1 000 g/mol, et une rétention des sels comprise entre 80 % et 99 % à un débit de 6 à 30 $1/m^2/h$.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4900449 A
- US 4964990 A
- US 6056903 A
- EP 1440727 A1
- EP 1060785 A1
- US 5151901 A
- US 5922203 A
- US 4872984 A


### In der Beschreibung aufgeführte Nicht-Patentliteratur


- **H.SUSANTO et al.** *Material Science and Engineering C32,* 2012, 1759-1766
- **PENG et al.** *Bioresource Technology,* 2011, vol. 102, 2289-2295
- **SUSANTO et al.** *Journal of Membrane Science,* 2007, vol. 288, 157-167
- **H. SUSANTO et al.** *Material Science and Engineering C32,* 2012, 1759-1766